# EUROPÄISCHE PATENTSCHRIFT

(11) **EP 1 638 807 B1**
(45) Veröffentlichungstag und Bekanntmachung des Hinweises auf die Patenterteilung: **06.12.2006**
(21) Anmeldenummer: 04739971.2
(22) Anmeldetag: 17.06.2004
(51) Int. Cl.: B60Q 1/14, B60R 16/02

(54) **LENKSTOCKMODUL FÜR EIN FAHRZEUG**
STEERING COLUMN MODULE FOR A VEHICLE
MODULE COLONNE DE DIRECTION POUR UN VEHICULE

(30) Priorität: 01.07.2003 DE 10330489
(43) Veröffentlichungstag der Anmeldung: 29.03.2006
(73) Patentinhaber: Valeo Schalter und Sensoren GmbH, 74321 Bietigheim-Bissingen (DE)
(72) Erfinder: HASCH, Martin, 71701 Schwieberdingen (DE); LIPFERT, Rainer, 74076 Heilbronn (DE); BINDER, Bernd, 74372 Sersheim (DE); GRÜNER, Roland, 71732 Tamm (DE); SIMONIS, Karl, 75428 Illingen (DE); SUCHANEK, Jürgen, 74363 Güglingen (DE)
(74) Vertreter: Bulling, Alexander
(86) Internationale Anmeldenummer: PCT/EP2004/006511
(87) Internationale Veröffentlichungsnummer: WO 2005/002917

(56) Entgegenhaltungen:
- DE-A- 10 238 269
- DE-A- 19 700 175
- US-B1- 6 236 004

## Beschreibung

Die Erfindung betrifft ein Lenkstockmodul für ein Fahrzeug, insbesondere für ein Kraftfahrzeug, mit einem Hauptgehäuse, mit wenigstens einer im oder am Hauptgehäuse angeordneten, eine mit einem Betätigungsorgan gekoppelte Mechanik aufweisenden Schaltereinheit, mit wenigstens einer im oder am Hauptgehäuse angeordneten Leiterplatte, und mit wenigstens einem auf der Leiterplatte bewegbaren Kontaktschieber, der mit der Mechanik der Schaltereinheit bewegungsgekoppelt ist. Derartige Lenkstockmodule sind im Bereich von Lenkrädern von Fahrzeugen angeordnet und weisen in der Regel eine Vielzahl von Schaltereinheiten auf. Die Schaltereinheiten, die beispielsweise über Betätigungsorgane in Form von Schalthebeln betätigbar sind, können ausgebildet sein für: Blinkerschalter, Aufblendlichtschalter, Abblendlichtschalter, Scheibenwischerschalter oder dergleichen.

Bei derartigen Lenkstockmodulen (z.B. aus DE-A-102 38 269 bekannt) hat sich die Montage als nachteilig herausgestellt. Insbesondere das Montieren von Kontaktschiebern auf der Leiterplatte, auf der in der Regel hochempfindliche, elektrische und/oder elektronische Bauteile angeordnet sind, ist problematisch. Die Montage der die Kontaktschieber aufweisenden Schaltereinheiten auf der Leiterplatte muss sehr sorgfältig und präzise erfolgen. Ansonsten kann nicht ausgeschlossen werden, dass beim Beaufschlagen der Leiterplatte mit den Kontaktschieber die Leiterplatte beschädigt wird. Insbesondere können Haarrisse in der Leiterplatte auftreten, die zu Funktionsstörungen führen.

Der vorliegenden Erfindung liegt deshalb die Aufgabe zugrunde, ein Lenkstockmodul der eingangs beschriebenen Art bereit zu stellen, das auf vereinfachte Art und Weise montierbar sein soll.

Diese Aufgabe wird durch ein Lenkstockmodul der eingangs beschriebenen Art dadurch gelöst, dass die Leiterplatte und der Kontaktschieber einer gemeinsamen Vormontageeinheit angehören, die derart ausgebildet ist, dass eine Bewegungskopplung des Kontaktschiebers mit der Mechanik der Schaltereinheit bei der Montage der Schaltereinheit mit der Vormontageeinheit erfolgt. Hierdurch wird vorteilhafterweise erreicht, dass ein Beaufschlagen des Kontaktschiebers auf der Leiterplatte bei der Montage des Lenkstockmoduls nicht stattfindet. Vielmehr ist der Kontaktschieber Bestandteil einer Vormontageeinheit, die die Leiterplatte umfasst. Der Kontaktschieber kann folglich unabhängig von der Schaltereinheit auf der Leiterplatte vormontiert werden. Eine Bewegungskopplung des Kontaktschiebers mit der Schaltereinheit erfolgt erst bei Montage der Schaltereinheit mit der Vormontageeinheit. Beschädigungen der Leiterplatte beim Montagevorgang mit der Schaltereinheit können folglich nicht auftreten.

Erfindungsgemäß kann vorgesehen sein, dass wenigstens Teile des Grundgehäuses der Vormontageeinheit angehören. Das Grundgehäuse, beziehungsweise Teile davon, bilden folglich zusammen mit der Leiterplatte und dem Kontaktschieber eine eigene Baugruppe, die von den Schaltereinheiten separat handhabbar ist.

Bei einer weiteren, erfindungsgemäßen Ausführungsform der Erfindung ist vorgesehen, dass die Vormontageeinheit Gehäuseabschnitte aufweist, die die Leiterplatte wenigstens abschnittsweise abdecken. Hierdurch wird die Leiterplatte wenigstens abschnittsweise, und vorteilhafterweise vollständig, schützend abgedeckt. Beschädigungen an der Leiterplatte beziehungsweise an elektrischen und/oder elektronischen Bauteilen auf der Leiterplatte wird damit entgegengewirkt.
Zur Positionssicherung des Kontaktschiebers auf der Vormontageeinheit sind vorteilhafterweise an der Vormontageeinheit entsprechende Sicherungsmittel vorgesehen. Ein ungewolltes Bewegen der Kontaktschieber auf der Leiterplatte kann dadurch ausgeschlossen werden.

Zur Entriegelung der Sicherungsmittel bei der Montage der Schaltereinheit mit der Vormontageeinheit kann die Schaltereinheit Entriegelungsmittel aufweisen. Die Entriegelungsmittel können dabei beispielsweise die Sicherungsmittel aus der den Kontaktschieber sichernden Lager auslenken, so dass der Kontaktschieber freigegeben wird.

Die Sicherungsmittel können als Sicherungszungen ausgebildet sein, die aufgrund ihrer Materialelastizität gegen den jeweiligen Kontaktschieber wirken. Die Sicherungszungen können beispielsweise einstückig mit einem die Leiterplatte umgebenden Gehäuseabschnitt ausgebildet sein, beziehungsweisein den Gehäuseabschnitt angeformt sein.

Als Entriegelungsmittel kommen insbesondere zapfenartige Erhebungen in Betracht, die so ausgebildet sind, dass sie bei der Montage mit der Vormontageeinheit die jeweilige Sicherungszunge auslenken und den Kontaktschieber freigeben. Die Sicherungszunge kann beispielsweise in eine Sicherungsausnehmung am Kontaktschieber eingreifen.

Zur positionsgenauen Montage ist erfindungsgemäß denkbar, dass die Vormontageeinheit und die Schaltereinheit Zentriermittel aufweisen. Über die Zentriermittel können die beiden Einheiten so miteinander gefügt werden, dass eine Bewegungskopplung der Mechanik mit dem Kontaktschieber gewährleistet wird.

Ferner kann der Kontaktschieber eine Zentrieraufnahme aufweisen, die derart ausgebildet ist, dass sie bei der Montage mit einem freien Ende eines Hebelarms der Mechanik zusammenwirkt. Über die Zentrieraufnahme wird das freie Ende des Hebelarms bei der Montage mit dem Kontaktschieber bewegungsgekoppelt.

Eine weitere, besonders bevorzugte Ausführungsform der Erfindung sieht vor, dass die Schaltereinheit ein Schaltergehäuse aufweist, das an dem die Leiterplatte aufnehmenden Grundgehäuse anordenbar ist. Dadurch kann erreicht werden, dass zum einen die Schaltereinheit ohne den Kontaktschieber und zum anderen das Grundgehäuse mit der Leiterplatte und dem Kontaktschieber jeweils als selbstständige Vormontageeinheit handhabbar sind. Die Schaltereinheit weist vorteilhafterweise keine elektronischen und/oder elektrischen Bauteile auf, sondern lediglich eine die Bewegung der Betätigungsorgane umlenkende Mechanik, die im endmontierten Zustand mit dem jeweiligen Kontaktschieber bewegungsgekoppelt ist. Durch die Bewegungskopplung des Kontaktschiebers mit der Schaltereinheit entfallen zusätzliche elektrische Verbindungen zwischen der Schaltereinheit und der Leiterplatte.

Auf einer Leiterplatte, beziehungsweisean einem Grundgehäuse, können mehrere Schaltereinheiten in jeweils eigenen Schaltergehäusen angeordnet sein. Die jeweiligen Schaltergehäuse und das die Leiterplatte aufnehmende Grundgehäuse bilden hierbei jeweils eigene, selbstständig handhabbare Vormontageeinheiten.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine Ansicht auf die Unterseite eines Grundgehäuses eines erfindungsgemäßen Lenkstockmoduls,
- Figur 2: einen Teilschnitt durch das Grundgehäuse gemäß Figur 1,
- Figur 3: einen Teilschnitt durch eine auf dem Grundgehäuse gemäß Figur 1 und 2 angeordnete Schaltereinheit,
- Figur 4: das fertigmontierte Lenkstockmodul in teiltransparenter Ansicht.

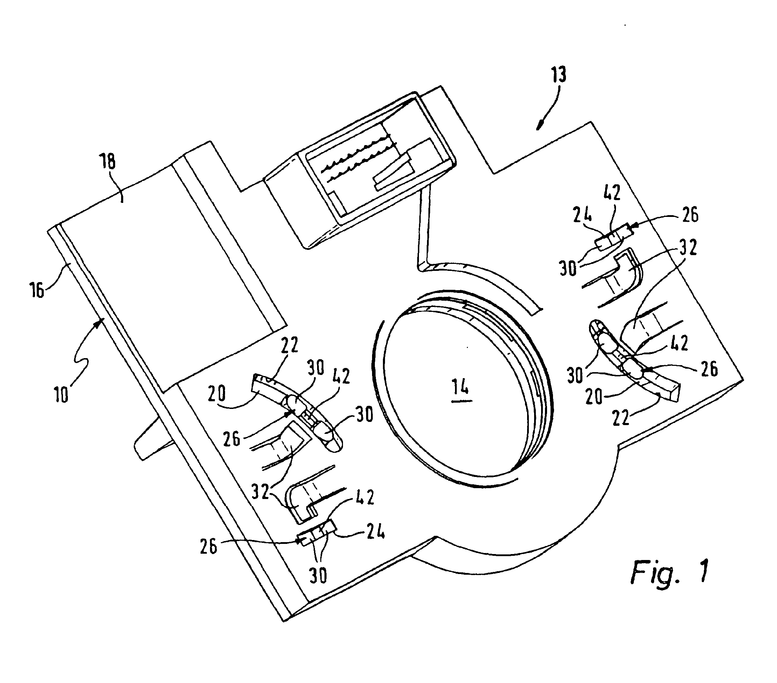

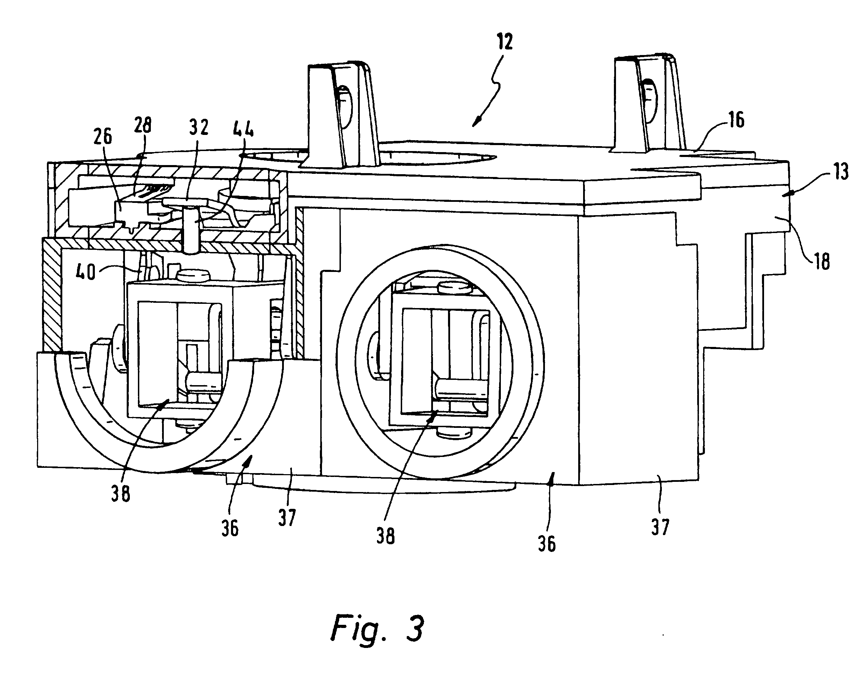

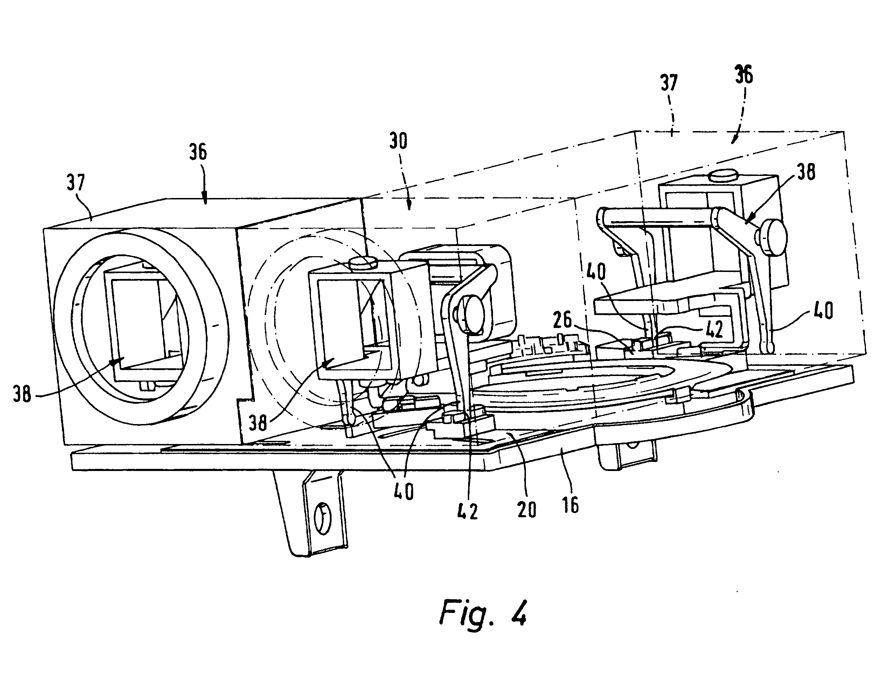

In der Figur 1 ist das Grundgehäuse 10 eines erfindungsgemäßen Lenkstockmoduls 12, das in der Figur 3 und 4 endmontiert dargestellt ist, gezeigt. Das Grundgehäuse 10 weist einen zentralen Durchbruch 14 für das nicht dargestellte Mantelrohr einer Lenksäule auf. Das Grundgehäuse 10 ist zweiteilig ausgebildet und umfasst ein erstes Gehäuseteil 16 sowie ein zweites Gehäuseteil 18.

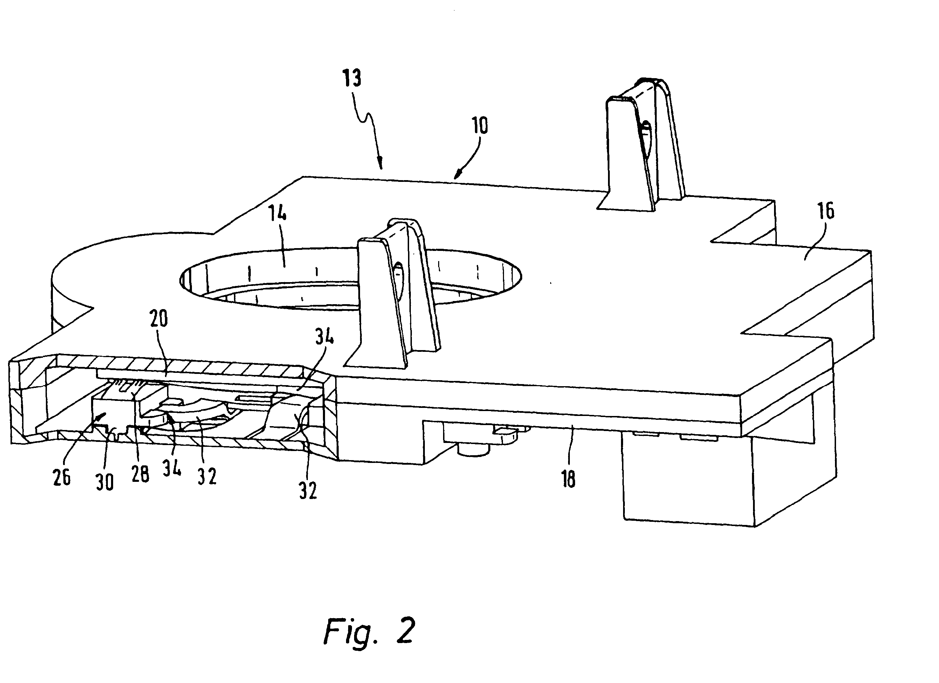

Wie insbesondere aus den Figuren 2 und 4 hervorgeht, beherbergt das Grundgehäuse 10 eine Leiterplatte 20 mit elektronischen und/oder elektrischen Bauteilen. In der Figur 1 ist die Leiterplatte 20 durch Führungsöffnungen 22, 24 am Gehäuseteil 18 teilweise zu erkennen.

Die Führungsöffnungen 22 sind entlang einer gekrümmten Linie ausgebildet; die Führungsöffnungen 24 entlang einer Geraden. Die Führungsöffnungen 22, 24 dienen jeweils zur Führung von Kontaktschiebern 26, die in den Figuren 2, 3 und 4 deutlich zu erkennen sind. Die Kontaktschieber 26 weisen jeweils der Leiterplatte 20 zugewandte Kontaktfedern 28 und in den jeweiligen Führungsöffnungen 22, 24 liegende, zapfenartige Führungsabschnitte 30 auf. Je nach der Lage der Kontaktschieber 26 in den Führungsöffnungen 22, 24 werden unterschiedliche Kontaktfeder auf der Leiterplatte kontaktiert. Das in der Figur 1 dargestellte Grundgehäuse bildet zusammen mit der Leiterplatte 20 und den Kontaktschiebern 26 eine separat handhabbare Vormontageeinheit 13 des erfindungsgemäßen Lenkstockmoduls 12. Um ein Bewegen der Kontaktschieber 26 in den Führungsöffnungen 22, 24 in der in der Figur 1 und 2 dargestellten Vormontageeinheit 13 zu unterbinden, sind Sicherungsmittel 32 vorgesehen.

Die Sicherungsmittel 32 sind als Sicherungszungen ausgebildet, die an das Gehäuseteil 18 angeformt sind. Aus der Figur 2 wird deutlich, dass die Sicherungszungen 32, die auf die Innenseite des Grundgehäuses 10 etwas zurückversetzt verlaufen, in Aufnahmeabschnitte 34 der Kontaktschieber 26 eingreifen. Die Kontaktschieber 26 sind damit in ihrer Vormontageposition fixiert und gegen Bewegen in den Führungsöffnungen 22, 24 gesichert.

Die in den Figuren 1 und 2 dargestellte Vormontageeinheit 13 hat den Vorteil, dass die Leiterplatte durch das Gehäuseteil 18 schützend abgedeckt ist. Außerdem sind die die Leiterplatte kontaktierenden Kontaktschieber 26 in ihrer Vormontageposition durch die Sicherungsmittel 32 lagegesichert.

Zur Montage des Lenkstockmoduls 12 werden in den Figuren 3 und 4 dargestellte Schaltereinheiten 36 auf das Gehäuseteil 18 aufgesetzt. Die Schaltereinheiten 36 umfassen eine in je einem Schaltergehäuse 37 angeordnete Schaltmechanik 38, die mit den Kontaktschiebern 26 bei der Anordnung der jeweiligen Schaltereinheit 36 an der Vormontageeinheit 13 bewegungsgekoppelt wird. Zur Bewegungskopplung weisen die Schaltmechaniken 38 Hebelarme 40 auf, die in zwischen den Führungsabschnitten 30 liegende Zentrieraufnahmen 42 an den Kontaktschiebern 26 eingreifen.

Die Schaltereinheiten 36 umfassen, wie in Figur 3 zu erkennen ist, zapfenartige Entriegelungsmittel 44, die bei der Montage mit der Vormontageeinheit die jeweiligen Sicherungszungen 32 auslenken und den zugehörigen Kontaktschieber 26 freigeben. Die Kontaktschieber 26 folgen dann in der jeweiligen Führungsöffnung 22, 24 einer Bewegung der Hebelarme 40, die von den Betätigungsorganen über die jeweilige Mechanik 38 ausgelenkt werden.

Zur Montageerleichterung sind an der Vormontageeinheit 13 und an den Schaltereinheiten 36 nicht näher dargestellte Zentriermittel vorgesehen.

Die Schaltereinheiten 36 sind als selbstständig handhabbare Vormontagegruppen ausgebildet, die zur Endmontage mit der Vormontageeinheit 13 verbaut werden. Ein Beschädigen der Leiterplatte 20 bei der Endmontage ist folglich ausgeschlossen.

In der Figur 4 ist das Gehäuseteil 18 nicht dargestellt, so dass die Leiterplatte 20 sichtbar ist. In der Figur 4 sind insgesamt drei Schaltereinheiten 36 auf der Vormontageeinheit 13 beziehungsweise am Grundgehäuse 10 angeordnet.

Die Schaltereinheiten 36 umfassen vorteilhafterweise keine elektrischen und/oder elektronischen Bauteile. Die zu den Schaltereinheiten 36 zugehörigen elektrischen Bauteile befindet sich auf der Leiterplatte 20 der Vormontageeinheit 13. Damit entfallen elektrische Verbindungsmittel zwischen den Schaltereinheiten 36 und der Vormontageeinheit 13.

## Patentansprüche

1. Lenkstockmodul (12) für ein Fahrzeug, insbesondere für ein Kraftfahrzeug, mit einem Grundgehäuse (10), mit wenigstens einer im oder am Grundgehäuse (10) angeordneten, eine mit einem Betätigungsorgan gekoppelte Mechanik (38) aufweisenden Schaltereinheit (36), mit wenigstens einer im oder am Grundgehäuse (10) angeordneten Leiterplatte (20), und mit wenigstens einem auf der Leiterplatte (20) bewegbaren Kontaktschieber (26), der mit der Mechanik (38) der Schaltereinheit (36) bewegungsgekoppelt ist, **dadurch gekennzeichnet, dass** die Leiterplatte (20) und der Kontaktschieber (26) einer gemeinsamen Vormontageeinheit (13) angehören, die derart ausgebildet ist, dass eine Bewegungskopplung des Kontaktschiebers (26) mit der Mechanik (38) der Schaltereinheit (36) bei der Montage der Schaltereinheit (36) mit der Vormontageeinheit (13) erfolgt.

2. Lenkstockmodul (12) nach Anspruch 1, **dadurch gekennzeichnet, dass** wenigstens Teile (16, 18) des Grundgehäuses (10) der Vormontageeinheit (13) angehören.

3. Lenkstockmodul (12) nach Anspruch 1 oder 2, **dadurch gekennzeichnet, dass** die Vormontageeinheit (13) Gehäuseabschnitte (16, 18) aufweist, die die Leiterplatte (20) wenigstens abschnittsweise abdecken.

4. Lenkstockmodul (12) nach Anspruch 1, 2 oder 3, **dadurch gekennzeichnet, dass** an der Vormontageeinheit (13) Sicherungsmittel (32) zur Positionssicherung des Kontaktschiebers (26) angeordnet sind.

5. Lenkstockmodul (12) nach Anspruch 4, **dadurch gekennzeichnet, dass** die Schaltereinheit (36) Entriegelungsmittel (44) aufweisen, die bei der Montage mit der Vormontageeinheit (13) die Sicherungsmittel (32) entriegeln.

6. Lenkstockmodul (12) nach Anspruch 4 oder 5, **dadurch gekennzeichnet, dass** die Sicherungsmittel (32) als Sicherungszungen ausgebildet sind, die gegen die Kontaktschieber (26) wirken.

7. Lenkstockmodul (12) nach Anspruch 4, 5 oder 6, **dadurch gekennzeichnet, dass** die Entriegelungsmittel (44) als zapfenartige Erhebungen derart ausgebildet sind, dass sie bei der Montage mit der Vormontageeinheit (13) die Sicherungszungen (32) auslenken und den Kontaktschieber (26) frei geben.

8. Lenkstockmodul (12) nach einem der vorhergehenden Ansprüche, **dadurch gekennzeichnet, dass** die Vormontageeinheit (13) und die Schaltereinheit (36) Zentriermittel zur gegenseitigen, positionsgenauen Montage aufweisen.

9. Lenkstockmodul (12) nach einem der vorhergehenden Ansprüche, **dadurch gekennzeichnet, dass** der Kontaktschieber (26) eine Zentrieraufnahme (42) ausweist, die derart ausgebildet ist, dass sie bei der Montage mit einem freien Ende eines Hebelarms (44) der Mechanik (38) zusammenwirkt.

10. Lenkstockmodul nach einem der vorhergehenden Ansprüche, **dadurch gekennzeichnet, dass** die Schaltereinheit (36) ein Schaltergehäuse aufweist, das an dem die Leiterplatte aufnehmenden Grundgehäuse (10) anordenbar ist.

11. Lenkstockmodul (12) nach einem der vorhergehenden Ansprüche, **dadurch gekennzeichnet, dass** an der Vormontageeinheit (13) im endmontierten Zustand mehrere Schaltereinheiten (36) in entsprechenden Schaltergehäuse (37) angeordnet sind.

## Claims

1. Steering column module (12) for a vehicle, in particular for a motor-vehicle, having a base housing (10) and with a switching unit (36) disposed on or in the base housing (10), the .switching unit (36) having a mechanism (38) coupled to a moving member, with at least one circuit board (20) disposed in or on the base housing (10) and at least one contact switch (26) which is mounted for motion on the circuit board (20) and which is coupled for cooperation with the mechanism (38) of the switching unit (36), **characterized in that** the circuit board (20) and the contact switch (26) belong to a common pre-assembled unit (13) which is configured in such a fashion that coupling for motion between the contact switch (26) and the mechanism (38) of the switching unit (36) transpires during assembly of the switching unit (36) to the pre-assembled unit (13).

2. Steering column module (12) according to claim 1, **characterized in that** at least portions (16, 18) of the base housing (10) belong to the pre-assembled unit (13).

3. Steering column module (12) according to claim 1 or 2, **characterized in that** the pre-assembled unit (13) has housing sections (16, 18) which at least partially cover portions of the circuit board (20).

4. Steering column module (12) according to claim 1, 2 or 3, **characterized in that** securing means (32) are disposed on the pre-assembled unit (13) to secure the position of the contact switch (26).

5. Steering column module (12) according to claim 4, **characterized in that** the switching unit (36) has unlocking means (44) which unlock the securing means (32) during assembly to the pre-assembled unit (13).

6. Steering column module (12) according to claim 4 or 5, **characterized in that** the securing means (32) are configured as securing tongues which cooperate with the contact switch (26).

7. Steering column module (12) according to claim 4, 5 or 6, **characterized in that** the unlocking means (44) are configured as pin-shaped raised structures which deflect the securing tongues (32), when mounting the pre-assembled unit (13), to release the contact switch (26).

8. Steering column module (12) according to any one of the preceding claims, **characterized in that** the pre-assembled unit (13) and the switching unit (36) have centering means for common mutual alignment during assembly.

9. Steering column module (12) according to any one of the preceding claims, **characterized in that** contact switch (26) has a central receptacle (42) that is configured to cooperate with the free end of a lever arm (44) of the mechanism (38) during assembly.

10. Steering column module (12) according to any one of the preceding claims, **characterized in that** the switching unit (36) has a switching housing which can be disposed on the base housing (10) accepting the printed circuit board.

11. Steering column module (12) according to any one of the preceding claims, **characterized in that**, in the final mounted state, a plurality of switching units (36) are disposed in corresponding switching housings (37) on the pre-assembled unit (13).

## Revendications

1. Module de colonne de direction (12) pour un véhicule, en particulier pour un véhicule automobile, comportant un boîtier de base (10), une unité de commutation (36), montée dans ou sur le boîtier de base (10) et munie d'un mécanisme (38) couplé à un organe de commande, au moins une plaquette de circuits imprimés (20), disposée dans ou sur le boîtier de base (10), et au moins un curseur de contact (26) mobile sur la plaquette de circuits imprimés (20) et couplé en mouvement avec le mécanisme (38) de l'unité de commutation (36), **caractérisé en ce que** la plaquette de circuits imprimés (20) et le curseur de contact (26) font partie d'une unité modulaire (13) commune qui est réalisée de telle sorte qu'un couplage en mouvement du curseur de contact (26) avec le mécanisme (38) de l'unité de commutation (36) est effectué lors du montage de l'unité de commutation (36) avec l'unité modulaire (13).

2. Module de colonne de direction (12) selon la revendication 1, **caractérisé en ce qu'**au moins des parties (16, 18) du boîtier de base (10) font partie de l'unité modulaire (13).

3. Module de colonne de direction (12) selon la revendication 1 ou 2, **caractérisé en ce que** l'unité modulaire (13) comporte des parties de boîtier (16, 18) qui masquent au moins par zones la plaquette de circuits imprimés (20).

4. Module de colonne de direction (12) selon la revendication 1, 2 ou 3, **caractérisé en ce que** des moyens de sécurité (32) pour un positionnement sûr du curseur de contact (26) sont disposés sur l'unité modulaire (13).

5. Module de colonne de direction (12) selon la revendication 4, **caractérisé en ce que** l'unité de commutation (36) comporte des moyens de déverrouillage (44), qui déverrouillent les moyens de sécurité (32) lors du montage avec l'unité modulaire (13).

6. Module de colonne de direction (12) selon la revendication 4 ou 5, **caractérisé en ce que** les moyens de sécurité (32) sont réalisés sous forme de languettes de sécurité qui agissent contre le curseur de contact (26).

7. Module de colonne de direction (12) selon la revendication 4, 5 ou 6, **caractérisé en ce que** les moyens de déverrouillage (44) sont réalisés sous forme de bosses en forme de tétons, de telle sorte que, lors du montage avec l'unité modulaire (13), ils dévient les languettes de sécurité (32) et libèrent le curseur de contact (26).

8. Module de colonne de direction (12) selon l'une quelconque des revendications précédentes, **caractérisé en ce que** l'unité modulaire (13) et l'unité de commutation (36) comportent des moyens de centrage pour le montage réciproque en position exacte.

9. Module de colonne de direction (12) selon l'une quelconque des revendications précédentes, **caractérisé en ce que** le curseur de contact (26) comporte un logement de centrage (42), qui est réalisé de telle sorte que, lors du montage, il coopère avec une extrémité libre d'un bras de levier (44) du mécanisme (38).

10. Module de colonne de direction (12) selon l'une quelconque des revendications précédentes, **caractérisé en ce que** l'unité de commutation (36) comporte un boîtier de commutation, qui peut être monté sur le boîtier de base (10) recevant la plaquette de circuits imprimés.

11. Module de colonne de direction (12) selon l'une quelconque des revendications précédentes, **caractérisé en ce que**, dans la position finale de montage, plusieurs unités de commutation (36) sont disposées sur l'unité modulaire (13) dans des boîtiers de commutation (37) correspondants.
